## Europäisches Patentamt

## European Patent Office

## Office européen des brevets

(19)

(11) Publication number: **0 173 506**
**B1**

(12)

# EUROPEAN PATENT SPECIFICATION

(45) Date of publication of the patent specification:
26.09.90

(51) Int. Cl.⁵: **B31B 37/00**

(21) Application number: **85305693.5**

(22) Date of filing: **12.08.85**

(54) Methods for preparing a stack of thermoplastic sacks.

(30) Priority: **20.08.84 US 642611**

(43) Date of publication of application:
**05.03.86 Bulletin 86/10**

(45) Publication of the grant of the patent:
**26.09.90 Bulletin 90/39**

(84) Designated Contracting States:
**AT BE CH DE FR GB IT LI LU NL SE**

(56) References cited:
**EP-A- 0 021 463**
**EP-A- 0 064 321**
**DE-B- 2 528 709**
**GB-A- 1 040 439**
**US-A- 2 320 326**
**US-A- 3 853 664**
**US-A- 4 386 924**

(73) Proprietor: **MOBIL OIL CORPORATION, 150 East 42nd Street, New York New York 10017(US)**

(72) Inventor: **Benoit, Gordon Leon, 113 Creekside Drive, Macedon New York 14502(US)**

(74) Representative: **Cooper, John Anthony et al, Mobil Court 3 Clements Inn, London WC2A 2EB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

The present invention relates to methods of preparing stacks of thermoplastic sacks, more particularly, this invention relates to methods of preparing stacks of such sacks having at least a substantially flat rectangular bottom. One type of sack contemplated for preparation by the method of the present invention is more particularly defined in our copending European Patent Application No. 85303049.2.

The sack structure of that patent application is of a thermoplastic film material and it comprises front and rear sack walls connected by gusseted side walls. The sack has an open mouth top portion, which is characterised by having handles located at opposite end regions thereof, said handles each being of two films as a result of being integral extensions of said front, rear and gusseted side walls. The sack has a bottom wall planarly extensible so as to form a rectangle with at least no substantial excess film outside of the bulk volumetic capacity of the bottom region of said sack. By "no substantial excess" is meant no excess over that necessary to form seam seals. An alternative manner of describing the bottom of such a sack is that said bottom is formed from integral extensions of said front, rear and side walls and the closure thereof is 4 two-film, gusset-to-wall heat seals when said bottom is a square, and 4 two-film, gusset-to-wall heat seals when said bottom is a rectangle.

European Patent Application 0 021 463 discloses a method of producing a web of a plurality of interconnected plastic sacks with gusset folds, at least comprising a central and two outer longitudinal gusset fold edges, which bound a first and a second gusset fold part by providing a continuously supplied tubular plastics foil by heatsealing with a first transverse bottom seal which extends across the entire width of the tubular foil and moving the tubular foil over a predetermined distance to another sealing position, wherein (a) a tubular foil is provided at both sides with at least bottom fold part seals each bottom fold part seal obtained by heatsealing a gusset fold part to the opposite outer foil layer, said bottom fold part seals extending from an outer gusset fold edge to the nearest central fold edge; (b) subsequently the tubular foil as obtained under step (a) is moved over a predetermined distance and immediately after having reached another sealing position a transverse bottom seal is formed by simultaneously heatsealing the opposite foil layers, extending between the central gusset fold edges and opposite bottom fold part seals to each other.

This document is directed to a web of interconnected plastic sacks, rather than to a stack additionally, the formation of handles and tab members are not disclosed therein.

The present invention provides a method of preparing a stack of at least substantially flat, rectangular-bottom, thermoplastic, flexible film sacks, which method comprises:

(a) forming a tube of thermoplastic film;

(b) collapsing the tube while simultaneously forming therein two oppositely disposed, spaced-apart, parallel gussets;

(c) forming a transverse sealed seam across the mid-section of the collapsed tube between the spaced-apart gussets and simultaneously or subsequently forming, across the full width of the tube, a pre-weakened transverse line closely next adjacent to, and parallel with, the transverse sealed seam, and simultaneously or subsequently forming a transverse sealed seam across the full width of the collapsed tube closely next adjacent to, and parallel with, the pre-weakened transverse line;

(d) forming in each of the four gusset folds a diagonal sealed seam so as to meet the ends of the mid-section transverse sealed seam and form an obtuse angle therewith, the seal-pairs of each gusset being superimposed when the gussets are in their lay-flat position;

(e) the structures are separated along the pre-weakened line;

(f) the process is repeated with a stacking and registration of the separated structures;

(g) four folded triangles of film located outside of the diagonal sealed seams are removed from each stacked structure; and

(h) a pair of handles and sack mouth opening are formed simultaneously or subsequently at the opposite end of said sack bottom in each sack of said stacked structures and a pair of tab members are formed as integral extensions of the sack mouth opening wherein each tab member has a pre-weakened region so as to accommodate individual sack separation from a plurality of sack structures bonded through the tab members.

For a pack of such sacks, a tab member is an integral extension of the sack mouth opening and each tab member has a pre-weakened region, such as perforations therein; so that when all tabs are fastened together, individual sacks may be detached from the tab structure.

This invention also provides such a method wherein each gusset is equal in width and the angle between projected diagonal seam lines of opposite gussets is about 90° so that the sack has an at least substantially flat bottom of unequal length and width when planarly extended.

This invention further provides such a method including the additional step of fastening a plurality of sacks through the tab members.

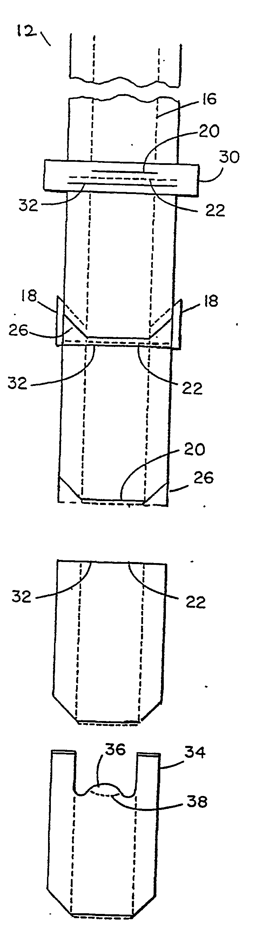

The sole Figure is a plan view, in schematic form, illustrating, in part, a method sequence of the present invention.

In the Figure, a tube of thermoplastic film 12 is shown collapsed to a lay-flat condition so as to have parallel gussets 16 formed therein. The gusseted tube progresses to a station 30 where a transverse sealed seam 20 is impressed across the mid-section of the tube between the front and rear panels of the collapsed tube. Simultaneously or subsequently, a pre-weakened transverse line 22 is effected closely next adjacent to, and parallel with, transverse sealed seam 20 but across the full width of the tube. Simultaneously or subsequently to the

formation of seal 20 and line 22, a second transverse sealed seam 32 is impressed across the full width of the tube closely next adjacent to, and parallel with pre-weakened transverse line 22. Seam 32 is of the same type as 20 in that it seals, but does not sever, the films. Ultimately, seal 32 will be the seal in the handle loops 34 of the finished bag.

Thereafter, each gusseted portion of the tube transverses an interposed PTFE-coated plate 18. Four sealing seams 26 are diagonally formed in the gusset region to meet, in pairs, at opposite ends of seam 20, the PTFE-coated plates preventing seams 26 from sticking to each other immediately after formation. At this stage, the bag bottoms are effectively sealed but still interconnected to the top of an adjacent bag blank. The bag blanks are then severed along pre-weakened transverse line 22 and stacked (not shown) to a height of 50, 75, 100 or more. The four triangular double fold sections beyond or outside sealing seams 26 are removed by any suitable means; for example, a cutting member (not shown). Simultaneously or subsequently, at the opposite end of the stack, a suitable die cutting member can remove part of the stack so as to form a pair of handles, a sack mouth opening and a suitable tab member as shown at 34, 36 and 38.

As shown by 34, the sack handles and sack mouth opening can have a variety of shapes. The plurality of sacks may be fastened together, for example, at a tab 36. A convenient means of fastening the sacks together at each tab pair, is by ultrasonic, thermal welding. Individual sacks can be torn from the pack along lines such as that illustrated by pre-weakened line 38. The sack packs also can have an orifice in each tab 36 to accommodate suspension of a sack pack. This will complete the formation of a handled sack, the bottom of which can be planarly extended so as to have a flat bottom. By "planarly extended" is meant that the sack is extended in internal volume to its utmost by expanding the gussets fully, thereby forming a flat bottom, rectangular in nature, having a length greater than its width.

In a preferred process, stacks of structures would be assembled as described above with the following modification. After each structure is separated from its succeeding structure it is stacked in registration and bonded to its preceeding structure. The bonding is effected with hot needles which pierce through the top structure at least to the next structure melt bonding each structure to the adjacent structure. The details of this technique are disclosed in U.S. 4, 526, 639. The hot pin bonding is effected in an area which will ultimately be removed during handle and sack mouth forming. This hot pin bonding insures stack registration stability during stack movement as the remainder of the process is carried out. Thereafter, the stack is permanently bonded together, by any suitable means in an area which will ultimately become the suspension and tear-off region of the pack. After bonding, either simultaneously or sequentially the triangular sections are removed, as by cutting; and the handles, sack mouth opening, and intermediate tab region 36 are formed by an appropriate die cutting member.

During this action or subsequently, a suspension orifice is formed closely adjacent to and above the point of bonding in the tab region. At the same time or thereafter, the preweakening can be formed in the tab area above the lowest amplitude of the stress relief areas at the base of handles 34. The resulting sack pack will be similar to a stack of sacks produced as in the Figure but having common bonding in tab area 36, an adjacent suspension orifice and a preweakened tear-of line 38.

Sacks of the structures described can be formed by employing any suitable thermoplastic material, for example, a polyolefin film. In employing the term "polyolefin", it is used generically to include all polymer species, including, for example, low-density polyethylene, linear low-density copolymers of ethylene and another alpha-olefin, high-density polyethylene, mixtures and blends of the same, and other monomer counterparts, etc. The bag film can be of any gauge, for example, from 0.3 to 5 mils, such as 0.75 to 1 mil, in thickness.

In forming the flat-bottomed bag, it is preferred that the angle between the diagonal seal line and the bottom seal be at least approximately 135° when said bag is in its lay-flat condition. It is also preferred that the open-mouth portion of the handled sacks of the present invention have stress-relief curves or arcs extending from the base of the handle to a raised portion of the bag mouth. This will militate against splitting or tears occurring in the bag mouth during handle extension or when the bag is being filled with any bulky material. The handles and bag mouth opening can have any configuration.

In forming the bag structure, the pertinent angles need not be precise, e.g., exactly 90°, 45°, or 135°. Reasonable processing latitude should permit some deviation from these guidelines. Likewise, in forming seal seams, the ends thereof can be curved or angled in order to accommodate or ensure good closure at all film interfaces and joints. Double or plural line seams and seals are also contemplated.

## Claims

1. A method for preparing a stack of at least substantially flat, rectangular-bottom, thermoplastic, flexible film sacks, which method comprises:

(a) forming a tube of thermoplastic film (12);

(b) collapsing the tube while simultaneously forming therein two oppositely disposed, spaced-apart, parallel gussets (16);

(c) forming a transverse sealed seam (20) across the mid-section of the collapsed tube between the spaced-apart gussets and simultaneously or subsequently forming, across the full width of the tube, a pre-weakened transverse line (22) closely next adjacent to, and parallel with, the transverse sealed seam, and simultaneously or subsequently forming a transverse sealed seam (32) across the full width of the collapsed tube closely next adjacent to, and parallel with, the pre-weakened transverse line;

(d) forming in each of the four gusset folds a diagonal sealed seam (26) so as to meet the ends of the mid-section transverse sealed seam and form an obtuse angle therewith, the seal-pairs of each gusset being superimposed when the gussets are in their lay-flat position;

(e) the structures are separated along the pre-weakened line;

(f) the process is repeated with a stacking and registration of the separated structures;

(g) four folded triangles of film located outside of the diagonal sealed seams are removed from each stacked structure; and

(h) a pair of handles (34) and sack mouth opening are formed simultaneously or subsequently at the opposite end of said sack bottom in each sack of said stacked structures and a pair of tab members (36) are formed as integral extensions of the sack mouth opening wherein each tab member has a pre-weakened region (38) so as to accommodate individual sack separation from a plurality of sack structures bonded through the tab members.

2. A method according to claim 1 wherein each gusset is equal in width and the angle between projected diagonal seam lines of opposite gussets is about 90° so that said sack has an at least substantially flat bottom of unequal length and width when planarly extended.

3. A method of making a pack of sacks, which method comprises forming a stack according to claim 1 or 2 and includes the additional step of fastening a plurality of sacks through the tab members (36).


**Patentansprüche**

1. Verfahren zum Herstellen eines Stapels von Beuteln mit einem zumindest im wesentlichen flachen und rechtwinkligen Boden, aus einer thermoplastischen, flexiblen Folie, dadurch gekennzeichnet, daß

· (a) ein Schlauch aus einer thermoplastischen Folie (12) gebildet wird,

(b) der Schlauch zusammengelegt wird, während gleichzeitig darin zwei einander gegenüberliegende, voneinander beabstandete parallele Zwickel (16) gebildet werden,

(c) zwischen den beabstandeten Zwickeln über den Mittelabschnitt des zusammengelegten Schlauches eine gesiegelte Quernaht (20) und gleichzeitig oder nachfolgend über die gesamte Breite des Schlauches eine in der Nähe der gesiegelten Quernaht und parallel dazu verlaufende vorgeschwächte Querlinie (22) erzeugt werden, sowie gleichzeitig oder nachfolgend über die gesamte Breite des zusammengelegten Schlauches eine in der Nähe der vorgeschwächten Querlinie und parallel dazu verlaufende gesiegelte Quernaht (32) gebildet wird,

(d) in jeder der vier Zwickelfalten eine diagonale Siegelnaht (26) erzeugt wird, so daß die Enden der im Mittelabschnitt verlaufenden gesiegelten Quernaht getroffen und mit dieser Quernaht ein stumpfer Winkel gebildet wird, wobei die Siegelpaare jedes Zwickels übereinander liegen, wenn sich die Zwickel in ihrer flachliegenden Position befinden,

(e) die Strukturen entlang der vorgeschwächten Linie getrennt werden,

(f) das Verfahren unter Stapeln und Ausrichten der getrennten Strukturen wiederholt wird,

(g) vier gefaltete Dreiecke der Folie, die außerhalb der diagonalen Siegelnähte verlaufen, von jeder gestapelten Struktur entfernt werden, und

(h) gleichzeitig oder nachfolgend an dem Ende, das dem Boden jedes Beutels der gestapelten Struktur gegenüberliegt, ein Paar Handgriffe (34) und eine Beutelöffnung sowie ein Paar Lappen (36) als einstückig ausgebildete Verlängerungen der Beutelöffnung erzeugt werden, wobei jeder Lappen einen vorgeschwächten Bereich (38) aufweist, so daß ein einzelnes Abtrennen eines Beutels von einer Mehrzahl an durch die Lappen miteinander verbundenen Beutelstrukturen möglich ist.

2. Verfahren nach Anspruch 1, worin jeder Zwickel in seiner Breite gleich ist und der Winkel zwischen den vorgesehenen diagonalen Nahtlinien der einander gegenüberliegenden Zwickel etwa 90° beträgt, so daß der genannte Beutel einen zumindest im wesentlichen flachen Boden mit unterschiedlicher Länge und Breite aufweist, wenn er eben ausgebreitet wird.

3. Verfahren zum Herstellen eines Packens von Beuteln, bei dem gemäß Anspruch 1 oder 2 ein Stapel gebildet wird und das die zusätzliche Stufe des Befestigens einer Mehrzahl von Beuteln durch die Lappen (36) einschließt.


**Revendications**

1. Un procédé de préparation d'une pile de sacs en film thermoplastique flexible, à fond rectangulaire, et au moins sensiblement plats, ce procédé comprenant les étapes suivantes:

(a) on forme un tube de film thermoplastique (12);

(b) on aplatit ce tube tout en formant simultanément dans celui-ci deux goussets parallèles (16) espacés disposés à l'opposé l'un de l'autre;

(c) on crée un cordon de soudure transversal (20) à travers la section moyenne du tube aplati entre les goussets espacés l'un de l'autre et, simultanément ou ultérieurement, on tire une ligne transversale de préaffaiblissement (22) sur toute la largeur du tube, cette ligne étant toute proche et parallèle du cordon de soudure transversal et, simultanément ou ultérieurement, on forme un cordon de soudure transversal (32) sur toute la largeur du tube aplati tout proche et parallèle à la ligne transversale pré-affaiblie;

(d) on forme, dans chacun des quatre replis de gousset, un cordon de scellement en diagonale (26) de façon à réunir les extrémités du cordon de scellement transversal de la section moyenne et à former, avec celui-ci, un angle obtus, les paires de scellement de chaque gousset étant superposées lorsque les goussets sont dans leur position à plat initiale;

(e) on sépare les structures le long de la ligne de préaffaiblissement;

(f) on répète le processus en l'accompagnant d'un empilement et d'un alignement des structurés séparées;

(g) les quatre triangles de film repliés disposés à l'extérieur des cordons de scellement en diagonale sont éliminés de chaque structure empilée; et

(h) simultanément ou ultérieurement, on forme une paire de poignées (34) et une embouchure de sac à l'extrémité opposée dudit fond de sac dans chaque sac desdites structures empilées et on forme une paire de languettes (36) conçues comme des prolongements dans la masse de l'embouchure du sac, chaque languette présentant une zone pré-affaiblie (38) de façon à permettre une séparation individuelle sac par sac, à partir d'un certain nombre de sacs empilés et reliés par ces languettes.

2. Un procédé selon la revendication 1, dans laquelle chaque gousset est égal et l'angle compris entre la projection des cordons de soudure en diagonale des goussets opposés est d'environ 90°, de façon à ce que ce sac comporte au moins un fond sensiblement plat de longueur et de largeur inégales lorsqu'il est développé en plan.

3. Un procédé de fabrication d'un empilement de sacs, consistant à former un empilement conformément à la revendication 1 ou 2, et comprenant l'étape supplémentaire consistant à attacher une pluralité de sacs par leurs languettes (36).